# EUROPÄISCHE PATENTSCHRIFT

(11) **EP 1 839 364 B1**
(45) Veröffentlichungstag und Bekanntmachung des Hinweises auf die Patenterteilung: **17.02.2010**
(21) Anmeldenummer: 05817417.8
(22) Anmeldetag: 29.11.2005
(51) Int. Cl.: H01M 8/24, H01M 8/10

(54) **AKTIVE TESTBRENNSTOFFZELLE FÜR DIE CHARAKTERISIERUNG UND QUALIFIZIERUNG VON ZELLENINTERNEN BRENNSTOFFZELLENKOMPONENTEN**
ACTIVE TEST FUEL CELL FOR CHARACTERIZING AND QUALIFYING CELL-INTERNAL FUEL CELL COMPONENTS
PILE A COMBUSTIBLE DE TEST ACTIVE, SERVANT A LA CARACTERISATION ET A LA QUALIFICATION DE COMPOSANTS DE PILE A COMBUSTIBLE INTERNES A LA PILE

(30) Priorität: 29.11.2004 DE 202004018521 U
(43) Veröffentlichungstag der Anmeldung: 03.10.2007
(73) Patentinhaber: H.I.A.T. GGMBH, 19061 Schwerin (DE)
(72) Erfinder: MÖLLER, Stephan, 23966 Wismar (DE); HÄRTE, Christian, 19395 Plau am See (DE); RUFFMANN, Bastian, 19053 Schwerin (DE)
(74) Vertreter: Schneider, Henry
(86) Internationale Anmeldenummer: PCT/DE2005/002149
(87) Internationale Veröffentlichungsnummer: WO 2006/056195

(56) Entgegenhaltungen:
- US-A- 5 858 569
- PATENT ABSTRACTS OF JAPAN Bd. 007, Nr. 140 (E-182), 18. Juni 1983 (1983-06-18) & JP 58 053166 A (TOKYO SHIBAURA DENKI KK), 29. März 1983 (1983-03-29)
- PATENT ABSTRACTS OF JAPAN Bd. 007, Nr. 229 (E-203), 12. Oktober 1983 (1983-10-12) & JP 58 119170 A (TOKYO SHIBAURA DENKI KK), 15. Juli 1983 (1983-07-15)

## Beschreibung

Eine Polymerelektrolytmembran-Brennstoffzelle PEMFC setzt einen chemischen Energieträger (Wasserstoff PEFC oder Methanol DMFC) direkt in Elektroenergie um. Die Kernsegmente einer PEMFC unterliegen einer ständigen Weiterentwicklung. Sowohl der Polymerelektrolyt als auch die Elektroden mit ihren Katalysatoren unterliegen hohen Materialansprüchen. Trotzdem steht die PEMFC kurz vor einer breiten Markteinführung.

Der prinzipielle Aufbau einer PEMFC ist wiederum unterteilt in zwei Sektoren:
1. Elektrochemie: **zelleninterne Komponenten**, die im eigentlichen Sinne die Brennstoffzelle beschreiben. Hierzu gehören vorwiegend:
   - Polymerelektrolytmembran PEM (Festelektrolyt in Folienform)
   - aktive Elektroden inkl. Edelmetallkatalysatoren (Dreiphasenschicht; vereint mit PEM ergibt sich Membran-Elektroden-Verbund → engL MEA Membrane Electrode Assembly)
   - Microlayer (Übergangsschicht von Elektrode zu Gasdiffusionsschicht)
   - Gasdiffusionsschichten GDL (Gasverteilung manchmal vereint mit Microlayer, PEM-Schutz)
   - Flowfiels (Gaszuführung bzw. -abführung, Stromconnector; event. mit Kühlschicht)
2. Hardware: Endplatten, Medienanschlüsse, Spannbolzen → vorwiegend mechanische Baugruppen und Komponenten

Testbrennstoffzellen für die Charakterisierung von zelleninternen Komponenten für Brennstoffzellen sind sehr simpel aufgebaut. Die zelleninternen Komponenten werden mit Hilfe von mechanisch steifen Endplatten und mittels Gewindebolzen unter Zuhilfenahme von Flachdichtungen verspannt. Die zelleninternen Komponenten (MEA, GDL mit und ohne Microlayer, Flowfields) werden mit der entsprechenden Dichtungstechnik (Flachdichtungen, Null-Ringen) in der richtigen Reihenfolge aufeinander geschichtet und mit der Hardware zu einer Test-Brennstoffzelle zusammengebaut.

Der Anpressdruck auf die aktive Zellenfläche der MEA (die Zone in der die elektrochemischen Reaktionen ablaufen) hängt bei diesen Testbrennstoffzellen vom Zusammenspiel der jeweiligen Schichtdicken der Dichtungen, der Gasdiffusionsschichten GDL und der MEA ab. Anschließend wird durch das Anzugsdrehmoment der Spannbolzen ein mechanischer Druck auf die aktive Zellenfläche gebracht, der zum einen die entsprechende Dichtigkeit gewährleistet und zum anderen die Kontakt- bzw. Übergangswiderstände des zelleninternen Aufbaus weitgehend minimiert. Je höher der zelleninterne Anpressdruck, umso niedriger der entsprechende Zelleninnenwiderstand.

Eine direkte Aussage über den zelleninternen Anpressdruck hängt also von
- der Auswahl der GDL-Schichtdicke
- der Schichtdicke des verwendeten Dichtungsaufbaus
- und von den Reibwertverlusten der mechanischen Verspannung ab.

### Nachteile altes Konzept

1. Ohne einen Wechsel der Dichtungen oder GDLs ist der Anpressdruck auf die zellinternen Komponenten nur in einem kleinen Bereich variierbar. Soll der Anpressdruck (bei gegebenen zelleininternen Aufbau) über einen definierten Bereich geändert werden, wird die Testzelle geöffnet und durch Verwendung anderer Flachdichtungen eine Verstellung des zelleninternen Anpressdrucks ermöglicht. Dieser liegt aber nur rechnerisch/theoretisch vor! Der wahre Wert bleibt unerkannt.
2. Die Quellung der Membran (Kontakt mit Produktwasser) ruft zusätzliche Druckkräfte hervor. Diese werden durch den starren Aufbau nicht kompensiert.
3. Es besteht keine Möglichkeit einer quantitativen Aussage über den Anpressdruck auf die zellinternen Komponenten in der Testbrennstoffzelle. Der Anpressdruck auf die aktive Fläche der MEA [N/mm²] lässt sich in dieser Zelle nicht ohne zusätzlichen Aufwand bestimmen. Dieser aber ist für die Reproduzierbarkeit der Messergebnisse ein sehr wichtiger Faktor.
4. Ein schnelles Austauschen von zelleninternen Komponenten ist nur mit sehr viel Vorsicht möglich; das Verfahren ist stark fehlerbehaftet und die Reproduzierbarkeit ist nicht gegeben.
5. Der Innenwiderstand der Zelle lässt sich nur mit einem zusätzlichen, externen Gerät bestimmen.
6. Für Maßnahmen einer Qualitätssicherung ist das Konzept nicht geeignet

### Neuer Vorschlag

Zur Charakterisierung und Qualifizierung von zelleninternen Komponenten wurde eine aktive Testbrennstoffzelle entwickelt, die es ermöglicht,
- mit geringem Montageaufwand,
- wenig fehlerbehaftet,
- und mit hoher Reproduzierbarkeit der Messergebnisse
technische Aussagen über die zu testenden zelleninternen Komponenten zu ermitteln.

Mit Hilfe einer pneumatischen Druckbeaufschlagung kann der Anpressdruck der aktiven Zellenfläche unabhängig von geometrischen Störgrößen eingestellt werden. Ein Pneumatikkolben belastet dabei direkt die aktive Zellenfläche über den Stempel. Ein montagefreundlicher Aufbau ermöglicht gleichzeitig eine sehr schnelle und fehlerfreie Montage der zelleninternen Komponenten. Eine hohe Reproduzierbarkeit der Messergebnisse ist damit gegeben. Einlegeflowfields (Monopolarplatten, Inlays) aus Titan ermöglichen dazu eine Variation der Gasverteilung und den Einsatz der Testbrennstoffzelle sowohl für Wasserstoff als auch für Methanol. Die Größe der aktiven Zellenfläche ist je nach Dimensionierung der Testbrennstoffzelle auslegbar von 5 bis 100 cm². Das zum Einsatz kommende Dichtungskonzept ist auf der druckbeaufschlagten Seite mit Nullringen (O-Ringdichtungen) als Kolben-Zylinder-Abdichtung ausgelegt. Der gasdicht abgedichtete Kolben hat einen Verfahrweg von über 2 mm. Dies gewährleistet einen nahezu unbegrenzte Variation der Gesamtdicke des zelleninternen Aufbaus. Zum Austauschen des gesamten zelleninternen Aufbaus kann der gesamte Montageblock in einem Stück aus der Halterung entfernt werden. Dadurch ist ein sicheres Austauschen von zelleninternen Komponenten stark vereinfacht.

Zusätzlich wird die Testbrennstoffzelle noch mit einer Auswerteeinheit und Steuereinheit ASE versehen. Ein automatischer Feingasdruckminderer sorgt für den gewünschten Vordruck des Zylinders im Testbetrieb. Die Höhe des Drucks kann nicht nur vorgegeben, sondern auch gemessen und anschließend in der Auswerteeinheit grafisch angezeigt werden.
Die ASE versorgt die Heizelemente der Testbrennstoffzelle mit der entsprechenden Temperaturspannung und ist in der Lage Parameter für die Qualifizierung von internen Brennstoffzellenkomponenten zu ermitteln. Zusammengefasst erfüllt die ASE folgende Aufgaben:
- Bedienfeld für Kalibrierung und Anzeigefeld für Messdaten
- Vorrichtung zur Impedanzmessung zur Ermittlung von Membranwiderstand, Membranleitfähigkeit und zelleninternen Gesamtwiderstandes
- Temperatureinstellung und Kontrolle
- Einstellung Gasvolumenströme und Steuerung von Mass-Flow-Controllern MFC
- Messung und Ermittlung von Sauerstoffpermeation der Membran (Qualitätskriterium)
- Kopplung der ASE über Datenschnittstelle mit fremden Geräten

Zum Einsatz kommen kann diese Apparatur sowohl in der Forschung und Entwicklung FuE, als auch der Qualifizierung im Rahmen von Qualitätssicherungsmaßnahmen bzw. Wareneingangstests jener Komponenten.
Mögliche Kunden wären somit Forschungseinrichtungen, Universitäten, Hersteller von Brennstoffzellenkomponenten und Hersteller von PEM-Brennstoffzellen.

Beansprucht wird der Schutz einer Apparatur gemäß Anspruch 1 für die Charakterisierung zellinterner Komponenten für Brennstoffzellen. Diese zeichnet sich durch die einstellbare Druckbeaufschlagung auf die aktive Fläche der Brennstoffzelle aus. (Eine Variation der zelleninternen Schichtdicken ist damit unabhängig vom gewählten Aufbau und hat keinen Einfluss auf Messungen)
Die Apparatur ermöglicht zusätzlich eine selbstständige Ermittlung elektrischer und physikalischer Messgrößen.

### Liste der Bezugszeichen

- 1: Kraft F
- 2: mit einer Druckkraft beaufschlagte Monopolarplatte
- 3: Membran-Elektronen-Einheit
- 4: feststehende Monopolarplatte
- 5: Rahmen
- 6: Stempel

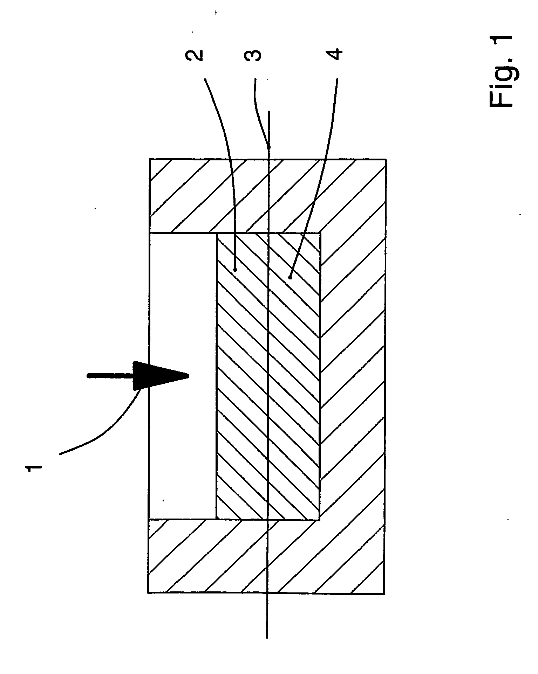

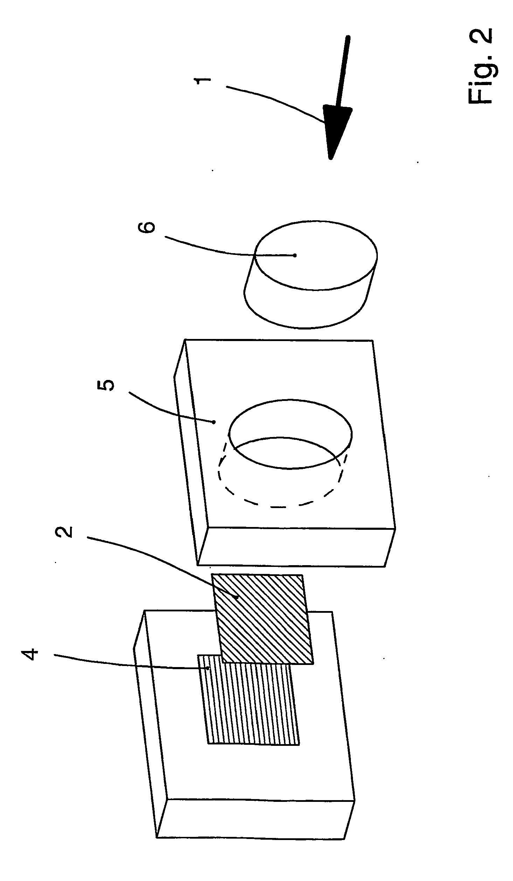

## Patentansprüche

1. Testbrennstoffzelle für die Charakterisierung und Qualifizierung von zelleninternen Brennstoffzellenkomponenten einer Brennstoffzelle, bestehend aus einem Aufnahmegehäuse mit zwei Gehäuseplatten, einer Kolben-Zylindereinheit, und den zelleninternen Brennstoffzellenkomponenten (2, 3, 4) der einen Brennstoffzelle, wobei
- die zelleninternen Brennstoffzellenkomponenten (2, 3, 4) zwischen den beiden Gehäuseplatten angeordnet sind und
- die beiden Gehäuseplatten nach außen abgedichtet und miteinander verspannt sind, **dadurch gekennzeichnet, dass** eine der beiden Gehäuseplatten mit der Kolben-Zylindereinheit gekoppelt ist, die mit ihrem Kolben die Gchäuseplatte durchdringt und einen Druckstempel (6) druckbeaufschlagt, der wiederum die zellinternen Komponenten belastet.

2. Testbrennstoffzelle nach Anspruch 1,
**dadurch gekennzeichnet, dass** der Druckstempel (6) die aktive Zellfläche der zelleninternen Brennstoffzellenkomponenten (2, 3, 4) belastet.

3. Testbrennstoffzelle nach Anspruch 2,
**dadurch gekennzeichnet, dass** die aktive Zellfläche der zelleninternen Brennstoffzellenkomponenten (2, 3. 4) zwischen einer feststehenden Monopolarplatte (4) und einer von der Kolbenzylindereinheit beaufschlagten Monopolarplatte (2) eingespannt ist.

## Claims

1. A test fuel cell for characterizing and qualifying cell-internal fuel cell components of a fuel cell consisting of a housing having two housing plates, a piston-cylinder unit, and the cell-internal fuel cell components (2, 3, 4) of the fuel cell, wherein
- the cell-internal fuel cell components (2, 3, 4) are arranged between the two housing plates, and
- the two housing plates are sealed towards the outside and secured to each other, **characterized in that** one of the two housing plates is coupled to the piston-cylinder unit, the piston of which passes through the housing plate and exerts pressure on a pressure piston (6) which in turn puts weight onto the cell-internal components.

2. A test fuel cell according to claim 1,
**characterized in that** the pressure piston (6) puts weight onto the active cell surface of the cell-internal fuel cell components (2, 3, 4).

3. A test fuel cell according to claim 2,
**characterized in that** the active cell surface of the cell-internal fuel cell components (2, 3, 4) is clamped between a stationary monopolar plate (4) and a monopolar plate (2) which is subject to pressure from the piston-cylinder unit.

## Revendications

1. Pile à combustible de test pour la caractérisation et la qualification de composants de pile à combustible internes d'une pile à combustible, se composant d'un boîtier de réception avec deux plaques de boîtier, d'une unité de cylindre à piston et des composants de pile à combustible (2, 3, 4) internes de la pile à combustible,
les composants de pile à combustible (2, 3, 4) internes à la pile étant disposés entre les deux plaques de boîtier et
les deux plaques de boîtier étant étanchéifiées par rapport à l'extérieur et assemblées fermement l'une avec l'autre,
**caractérisée en ce que** l'une des deux plaques de boîtier est couplée avec l'unité de cylindre de piston, laquelle traverse la plaque de boîtier avec son piston et alimente en pression une pièce de compression (6), laquelle applique à son tour une pression sur les composants internes à la pile.

2. Pile à combustible de test selon la revendication 1,
**caractérisée en ce que** la pièce de compression (6) applique une pression sur la surface de pile active des composants de pile à combustible (2, 3, 4) internes à la pile.

3. Pile à combustible de test selon la revendication 2,
**caractérisée en ce que** la surface de pile active des composants de pile à combustible (2, 3, 4) internes à la pile est encastrée entre une plaque monopolaire (4) fixe et une plaque monopolaire (2) soumise à pression par l'unité de cylindre de piston.
